# FASCICULE DE BREVET EUROPEEN

(11) **EP 3 160 622 B1**
(45) Date de publication et mention de la délivrance du brevet: **09.09.2020**
(21) Numéro de dépôt: 15759494.6
(22) Date de dépôt: 23.06.2015
(51) Int. Cl.: B01D 61/02, B01D 61/14, B01D 65/08, C02F 1/44, C02F 1/68, C02F 5/14, C02F 11/04, C02F 3/30

(54) **PROCÉDÉ DE TRAITEMENT D'UN FLUX D'EAUX USÉES PAR FILTRATION BASSE PRESSION**
VERFAHREN ZUR BEHANDLUNG EINES ABWASSERSTROMS DURCH NIEDERDRUCKFILTRATION
METHOD FOR TREATING A WASTEWATER STREAM BY LOW-PRESSURE FILTRATION

(30) Priorité: 27.06.2014 FR 1456040
(43) Date de publication de la demande: 03.05.2017
(73) Titulaire: Veolia Water Solutions & Technologies Support, 94410 Saint-Maurice (FR)
(72) Inventeur: GAID, Abdelkader, F-75014 Paris (FR); DAINES- MARTINEZ, Catherine, F-78570 Andresy (FR); LOGETTE, Sébastien, F-69100 Villeurbanne (FR); AMIEL, Christophe, F-92100 Boulogne Billancourt (FR)
(74) Mandataire: Santarelli
(86) Numéro de dépôt international: PCT/FR2015/051685
(87) Numéro de publication internationale: WO 2015/197973

(56) Documents cités:
- EP-A2- 2 236 463
- WO-A1-2014/081737
- FR-A1- 2 970 961
- JP-A- 2012 200 696
- US-A1- 2013 327 709
- Ghasem D. Najafpour: "Cross-flow microfiltration" In: "Biochemical Engineering and Biotechnology", 1 janvier 2007 (2007-01-01), Elsevier, Amsterdam, XP055173951, ISBN: 978-0-44-452845-2 page 362, page 362

## Description

L'invention concerne un traitement d'eaux usées permettant l'obtention d'une eau traitée de très grande pureté, en ayant une emprise au sol modérée, notamment en termes de génie civil, combinée à une faible production de boues générées par le traitement.

Ces eaux résultent d'une utilisation humaine, domestique, municipale ou industrielle (d'où l'expression d'"eaux usées") et contiennent une pollution organique ou minérale que l'on définit habituellement, notamment, en termes de matières en suspension (MES en abrégé), de demande biochimique en oxygène (DBO, en abrégé), et de demande chimique en oxygène (DCO en abrégé) ; les eaux usées peuvent en outre contenir, en fonction de leur origine, différentes formes de l'azote ainsi que des phosphates, voire des métaux lourds, notamment.

De nos jours, les exigences de dépollution font que le traitement des eaux usées se fait habituellement au moyen d'une biomasse, au sein de traitements qualifiés de biologiques.

Une biomasse au sens des procédés biologiques précités (et dans le présent contexte) est essentiellement formée d'organismes vivants, notamment des bactéries, qui, selon les cas, sont libres ou fixés (par extension, on intègre parfois à cette notion de biomasse la charge de pollution contenue dans l'effluent à traiter, en particulier sa fraction destinée à être consommée par ces organismes vivants). La biomasse libre est une biomasse qui se développe librement dans des bassins dans lesquels les eaux à traiter sont injectées et dans lesquels on maintient des conditions anoxiques (manque d'oxygène disponible), anaérobies (manque d'air) ou aérobies (milieux aérés) selon les cas. La biomasse fixée est une biomasse qui se développe sur des supports installés au sein de réacteurs contenant les eaux à traiter (par exemple sur un biofiltre, un disque biologique, un support flottant, etc.) qui peuvent, eux aussi, être en conditions anoxiques, anaérobies ou aérobies. On désigne sous le vocable de boues les micro-organismes vivants et les produits rejetés par la biomasse (qu'il s'agisse de produits générés par cette biomasse à partir de la pollution consommée, ou de la fraction non consommable de la charge de pollution entrante).

De tels procédés biologiques comportent habituellement des pré-traitements visant à enlever les particules les plus grosses (dégrillage), ou les huiles en suspension (déshuilage). Il peut aussi y avoir une étape de décantation primaire pour enlever les composés facilement décantables.

Ces procédés biologiques ont pour inconvénients qu'ils impliquent la mise en œuvre d'équipements mécaniques importants, une consommation élevée en énergie pour le brassage des bassins, l'aération des bassins pour maintenir la biomasse en conditions aérobies, et génèrent des quantités importantes de boues biologiques ; à cela il faut ajouter que ces procédés impliquent souvent l'aménagement de surfaces importantes en génie civil pour la construction et la mise en œuvre des bassins biologiques, mais aussi de décanteurs (souvent utilisés en phase primaire - voir ci-dessus) ou de clarificateurs (souvent utilisés en phase secondaire à la sortie des bassins ou réacteurs biologiques permettant de séparer l'eau traitée de la boue activée), ainsi que des cuves et installations de traitement des boues précitées.

De plus, si on désire réutiliser les eaux usées après traitement, pour divers usages possibles, les exigences associées à ces usages possibles impliquent habituellement un traitement dit tertiaire (filtration gravitaire, c'est à dire par gravité par exemple au sein d'une filtration à sable, suivie d'une désinfection par UV ou chlore ou filtration au moyen de membranes). Pour certains usages dans l'industrie (par exemple en cas de besoin d"eau pure) ou en recharge des nappes phréatiques, un traitement supplémentaire (quaternaire) peut même être nécessaire. On comprend que ces traitements tertiaires (voire quaternaires) ajoutent leur coût à celui des traitements précédents.

L'invention vise à proposer un procédé de traitement d'eaux usées ne présentant pas tous ces inconvénients, mais permettant de fournir une eau de grande pureté, avec une emprise au sol réduite du fait de la réduction du nombre et de la taille modérée des bassins ou réacteurs nécessaires, tout en valorisant au mieux les produits générés par le traitement. A titre subsidiaire, l'invention vise à minimiser non seulement le coût d'investissement mais aussi le coût de fonctionnement, notamment en termes de consommation d'énergie, par mise à profit de la DCO contenue dans les eaux usées.

Plus récemment, diverses technologies ont été proposées pour le traitement d'eaux usées qui mettent en œuvre, non plus un traitement secondaire de type biologique ou biochimique, mais un ou plusieurs traitements de filtration membranaire (souvent réservés en traitement tertiaire), voir EP 2 236 463 A2, WO 2014/081737 A1 et JP 2012 200 696.

Il peut être rappelé que les traitements de filtration membranaire sont classiquement répartis entre traitements de microfiltration, d'ultrafiltration, de nanofiltration et d'osmose inverse, selon un ordre impliquant une filtration de plus en plus sévère (on intègre souvent l'électrodialyse dans ces traitements membranaires). On définit habituellement pour une membrane un seuil de coupure correspondant à la taille des particules qu'elle est capable de retenir ; ainsi, pour une membrane de microfiltration (MF en abrégé), le seuil de coupure peut être choisi entre 100 et 10 000 nanomètres ; pour une membrane d'ultrafiltration (UF en abrégé) ce seuil peut être de l'ordre de 10 nanomètres (et compris entre 1 et 100 nanomètres, et, pour la nanofiltration (NF en abrégé) et l'osmose inverse (OI en abrégé), ce seuil peut être égal voire inférieur à un nanomètre. On dit parfois qu'une membrane de microfiltration retient des particules de taille significative et des graisses, qu'une membrane d'ultrafiltration retient en outre les composés sous forme colloïdale tels que des protéines, qu'une membrane de nanofiltration retient en outre des sels et que, finalement, une membrane d'osmose inverse ne laisse guère passer que de l'eau pure (en fait, la distinction entre membranes de microfiltration et membranes d'ultrafiltration n'est pas toujours bien claire). Compte tenu des seuils de coupure actuellement considérés, des membranes de microfiltration ou d'ultrafiltration peuvent être considérées comme étant des membranes poreuses, tandis que les membranes de nanofiltration ou d'osmose inverse sont tout au plus perméables ou semi-perméables. Une autre différence entre ces couples de membranes est que les traitements de microfiltration ou d'ultrafiltration se font avec une différence de pression (entre les deux faces des membranes) qui est faible, typiquement de l'ordre d'un bar, par exemple de 0.2 bar à 2, voire 5 bars, alors que les traitements de nanofiltration ou d'osmose inverse impliquent des différences de pression bien plus élevées, typiquement comprises entre 5 bars et 20 bars On comprend ainsi que ces traitements membranaires impliquent une consommation d'énergie importante qui a longtemps freiné leur essor.

Il a parfois été proposé de soumettre un effluent à traiter à un traitement de filtration membranaire combiné à un traitement biologique ; on parle alors parfois de bioréacteur membranaire (avec une membrane immergée ou associée à un réacteur contenant une biomasse). On peut, à cet égard, citer le document « Design of Municipal Wastewate Treatment Plants », WEF Manual of Practice N°8, ASCE Manuals and Reports on Engineering Practice N°76, Fifth Edition, "Membrane processes», pp 16-119 à 16-150, 2010. Il semble en être de même dans le document "Wastewater Engineering, Treatment and Reuse, Fourth Edition, Metcalf & Eddy, Inc, McGraw Hill, membrane filtration processes, pp 1104-1137, 2003. On peut en outre se référer au document "Evaluation of Economic Viability and Benefits or Urban Water Reuse and its Contribution to Sustainable Development" de Lazarova, Rougé, Sturny et Arcangeli, dans Water Practice & Technology, Vol 1, N°2 2006. D'autres documents se sont focalisés sur l'apport d'une osmose inverse en complément de traitements secondaires de différents types (voir par exemple la thèse de Anna Kieniewicz, AP/KTH "A reverse osmosis (RO) plant for sewage treatment and nutrient recovery - the influence of pre-treatment methods", R nr 17, oktober 2006, Vatten - ISSN 1651-064X)

Une attention toute particulière a été apportée à la possible complémentarité pouvant exister entre un premier étage de microfiltration ou d'ultrafiltration, et un étage de nanofiltration, voire d'osmose inverse. En particulier une installation pilote a été construite et mise en fonctionnement sous le libellé IMANS™ pour « Integrated Membrane ANaerobic Stabilization System », sans traitement secondaire. On peut à ce propos se référer à un article « Closing the Gap - Reaching for Energy Independency in Water Réclamation » de Graham Juby, P.E, July 27, 2012, TACWA (Texas Association of Clean Water Agencies). Une telle installation met en œuvre, en tant que traitement primaire, une décantation générant des boues qui sont injectées dans un digesteur anaérobie (donc sans air ajouté, donc sans consommation d'énergie) qui produit du biogaz à partir de ces boues. Ce biogaz constitue une production d'énergie qui aboutit au résultat que le bilan énergétique de l'installation correspond à une consommation globale d'énergie qui reste modérée par rapport à ce que consomment effectivement les étages successifs de filtration membranaire. Il y a donc bien un traitement biologique associé aux traitements de filtration membranaire, mais ce traitement biologique s'applique au traitement des boues issues du traitement primaire et aux concentrats issus des traitements membranaires basse (MF) et haute pression (NF ou OI) et ne s'applique pas à l'eau en cours de traitement.

L'invention vise à permettre un fonctionnement amélioré d'au moins un étage de microfiltration ou d'ultrafiltration, recevant un flux d'eau brute à traiter ayant au plus subi un pré-traitement d'élimination de particules par dégrillage/dessablage ou déshuilage conventionnel (sans décantation primaire). Elle vise notamment à permettre une réduction du pouvoir colmatant de la pollution contenue dans le flux d'eau à traiter, par exemple vis-à-vis des composants pouvant précipiter sur la membrane, tout en augmentant la concentration des boues à filtrer au droit des membranes sans risquer de dégrader l'efficacité d'un éventuel étage complémentaire de filtration membranaire.

Il peut être noté que, pour augmenter la concentration des boues issues du concentrât, et donc les boues séparées au niveau des membranes, il faut diminuer le taux de purge ou augmenter le taux de conversion, ce qui n'est possible que si le flux à filtrer n'est pas trop colmatant.

L'invention propose à cet effet un procédé de traitement d'un flux d'eaux usées, selon lequel on applique à ce flux, après au plus un éventuel pré-traitement de dégrillage/dessablage ou de déshuilage, un traitement de filtration au moyen de membranes de microfiltration ou d'ultrafiltration, en faisant circuler le flux au droit des membranes avec une vitesse d'au moins 0,1 m/s en présence d'un séquestrant organique composé à base de phosphonates organiques à une concentration efficace pour séquestrer des ions métalliques contenus dans le flux et minimiser la formation de carbonate de calcium, avec une différence de pression de part et d'autre des membranes inférieure ou égale à 5 bars et on applique ensuite un second traitement de filtration au moyen de membranes de nanofiltration ou d'osmose inverse,
dans lequel on prélève des boues générées lors du traitement de filtration au moyen de membranes de microfiltration ou d'ultrafiltration et on les injecte dans un réacteur biologique anaérobie en sorte d'y former un biogaz que l'on récupère, et
dans lequel, après le traitement de filtration au moyen de membranes de microfiltration ou d'ultrafiltration et le second traitement de filtration au moyen de membranes de nanofiltration ou d'osmose inverse, on transfère le concentrat produit par les membranes de nanofiltration ou osmose inverse vers ledit réacteur biologique anaérobie pour y produire du biogaz.

Ainsi, l'invention enseigne de faire circuler le flux à traiter (après tout au plus un prétraitement grossier) le long de membranes de microfiltration ou d'ultrafiltration, donc des membranes ayant un seuil de coupure supérieur ou égal à 10 nanomètres, avec une vitesse tangentielle d'au moins 0,1 m/s, ce qui contribue à empêcher la formation de dépôts susceptibles de réduire le seuil de coupure des membranes. En outre, l'invention enseigne que le flux contienne, lorsqu'il circule le long des membranes, une quantité efficace de séquestrant organique constitué de phosphonates organiques pour chelater des ions métalliques tout en minimisant la formation de carbonates de calcium (voire de sulfates ou de fluorures de calcium). Cette quantité efficace est avantageusement comprise entre 0.25 mg/L et 3.75 mg/L, voire 4 mg/L, de phosphonates organiques.

En fait, le fait d'utiliser des phosphonates organiques pour le bon fonctionnement de membranes de filtration est déjà connu en soi, dans le cas de membranes de nanofiltration ou d'osmose inverse pour les protéger contre l'entartrage dans la production d'eau potable ; ainsi un composé connu sous la désignation « Hydrex 4101 » a fait l'objet d'un agrément de l'Agence Française de Sécurité Sanitaire de Aliments (AFSSA) pour la protection de telles membranes « utilisées dans les systèmes de traitement d'eau destinée à la consommation humaine », en raison de sa formulation à base de phosphonates (à une teneur de 25%) permettant de lutter contre les phénomènes de colmatage des membranes de nanofiltration et d'osmose inverse. Il en découle que l'usage, selon l'invention, d'un séquestrant organique à base de phosphonates organiques en amont d'au moins une membrane de microfiltration ou d'ultrafiltration met en œuvre des phénomènes foncièrement différents de ceux intervenant dans le cas d'un tel séquestrant avant des membranes de nanofiltration ou d'osmose inverse.

Plus précisément, le flux d'eau à traiter longeant une membrane de microfiltration ou d'ultrafiltration contient une bien plus grande variété d'éléments que de l'eau longeant une membrane de nanofiltration ou d'osmose inverse après un traitement préalable poussé ; on peut donc s'attendre à ce que se produise un colmatage des membranes de microfiltration ou d'ultrafiltration par des composés sous forme particulaire ou colloïdale, alors que ces composés ne sont plus présents dans un flux circulant auprès de membranes de nanofiltration ou d'osmose inverse, de sorte que le problème de minimiser le colmatage de membranes MF ou UF est très différent du problème de minimiser le colmatage des membranes NF ou OI.

L'utilisation de phosphonates pour éviter le colmatage de membranes de nanofiltration ou d'osmose inverse a également été proposé dans le document WO - 2009/130324 où le problème technique à résoudre concerne l'abattement de la concentration des phosphonates contenus dans les boues extraites d'une zone membranaire de type NF ou OI (après une zone de pré-traitement pouvant comporter une zone membranaire de type MF ou UF).

Les avantages constatés lors de l'utilisation, connue en soi, de phosphonates en amont de membranes de nanofiltration ou d'osmose inverse ne permettaient en aucune manière de supposer que cette utilisation pourrait avoir le moindre intérêt en amont de membranes de microfiltration ou d'ultrafiltration précédées au plus d'un traitement grossier:
- En effet, les phosphonates sont des molécules dont on sait qu'elles ont tendance à s'absorber sur les matières en suspension, a fortiori sur les particules contenues dans le flux à traiter ; en conséquence, on avait toutes les raisons de supposer qu'une injection de phosphonates en amont de membranes de microfiltration ou d'ultrafiltration n'aurait aucun effet sur un flux contenant encore de la pollution particulaire ou colloïdale,
- Au contraire, une telle injection de phosphonates dans le flux à traiter par filtration sur des membranes de microfiltration ou d'ultrafiltration ne pouvait tout au plus qu'avoir l'effet qu'elle a lorsqu'elle est injectée en amont de membranes de nanofiltration ou d'osmose inverse (en l'absence de particules, de colloïdes ou de matières en suspension), à savoir séquestrer les ions calcium et chélater les minéraux et métaux, en sorte de les empêcher de précipiter sur les membranes, en leur permettant donc de traverser ces membranes, au risque de colmater d'éventuelles membranes ultérieures,
- En tout état de cause, une telle injection n'avait aucune chance de favoriser une densification des boues retenues par des membranes de microfiltration ou d'ultrafiltration sans risquer de colmater ces membranes.

De manière tout à fait imprévue, il a été constaté que l'injection de phosphonates organiques dans un flux à traiter par filtration sur des membranes de microfiltration ou d'ultrafiltration faisait intervenir deux phénomènes concurrents dont les cinétiques respectives permettaient de résoudre le problème technique visé ;
- Le phénomène le plus rapide était la tendance des phosphonates à séquestrer des ions calcium ou à chélater des minéraux ou des métaux,
- En outre, même après avoir ainsi séquestré ou chélaté des composés du flux à traiter qui auraient risqué de participer au colmatage des membranes, ces phosphonates conservent leur tendance à s'absorber sur les particules, colloïdes ou matières en suspension, avec une cinétique encore suffisamment rapide pour intervenir avant que les composés séquestrés ou chélatés aient traversé la membrane.

En d'autres termes, contrairement à ce qu'on pouvoir prévoir, la présence de matières en suspension, colloïdales ou particulaires avant une membrane de microfiltration ou d'ultrafiltration permet de mettre en synergie les effets possibles des phosphonates pour prélever les composés pouvant être chélatés ou séquestrés et les absorber immédiatement aux matières en suspension dans le flux à traiter pour densifier les boues et éviter que les composés chélatés ou séquestrés traversent les membranes.

Ainsi, l'utilisation de phosphonates organiques en amont de membranes de microfiltration et d'ultrafiltration est tout à fait innovant car il permet, tout en limitant le colmatage des membranes, d'éliminer efficacement une partie du calcium (et des minéraux ou métaux) présent dans le flux à traiter.

En outre, puisque ces phosphonates sont adsorbés sur les boues, ils sont efficacement séparés de l'effluent filtré, tandis que leur traitement biologique avant leur rejet dans le milieu naturel est précisément favorisé par le fort taux de conversion des membranes (lié à la forte concentration des boues que ces phosphonates favorisent).

Et c'est de manière tout à fait inattendue qu'il a pu être constaté qu'une injection de phosphonates organiques dans un flux à traiter n'ayant au plus subi qu'un traitement grossier apportait une solution au problème technique consistant à empêcher le colmatage des membranes basses pression (microfiltration ou ultrafiltration).

En tout état de cause, il a été constaté que, en faisant circuler un flux d'eaux usées avec une vitesse suffisamment élevée, on réduisait encore mieux les risques de colmatage tout en générant une quantité acceptable de boues au point de ne pas exiger de nettoyage des membranes à une fréquence supérieure à un nettoyage par jour, voire un nettoyage tous les 3 à 10 jours.

Selon des caractéristiques avantageuses de l'invention, éventuellement combinées :
- l'addition du séquestrant favorise le piégeage des ions métalliques, empêche la précipitation du carbonate de calcium et favorise la filtration de l'eau à travers les pores de la membrane,
- le biogaz produit est transformé en énergie réutilisable sur site,
- le réacteur anaérobie est couplé avec un réacteur biologique constitué de bactéries fixées qui permet d'éliminer l'azote produit dans ledit réacteur anaérobie,
- le réacteur biologique à bactéries fixées est un bioréacteur à lit mobile ou MBBR (pour « moving bed bioreactor ») qui combine la nitratation et l'oxydation anoxique de l'ammoniaque par le développement d'un biofilm sur un support en plastique mis en mouvement par agitation ou aération.

Des objets, caractéristiques et avantages de l'invention ressortent de la description qui suit, donnée à titre d'exemple illustratif non limitatif, en regard des dessins annexés sur lesquels :
- La figure 1 est un schéma de principe d'une installation de traitement d'eaux usées mettant en œuvre une version du procédé de la présente divulgation,
- La figure 2 est un schéma de principe d'un exemple plus complet d'installation pour la mise en œuvre du procédé de l'invention,
- La figure 3 est un schéma de principe d'un autre exemple d'installation pour la mise en œuvre du procédé de l'invention,
- La figure 4 est un schéma de principe d'une variante de cet autre exemple d'installation pour la mise en œuvre du procédé de l'invention, et
- La figure 5 est un schéma de principe d'une autre variante de cet autre exemple d'installation pour la mise en œuvre du procédé de l'invention.

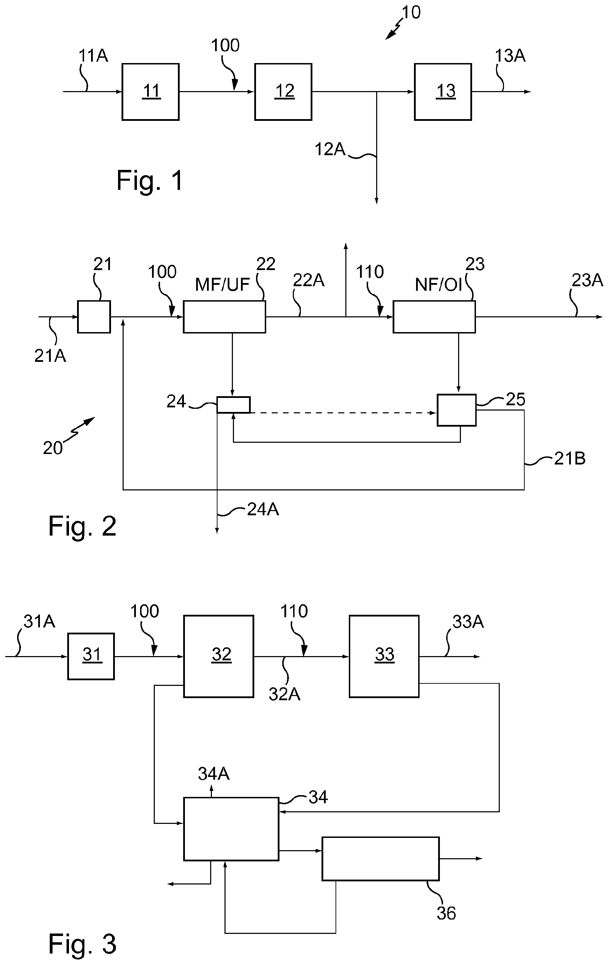

Dans un exemple particulièrement simple de la figure 1, une installation désignée sous la référence 10 comporte une zone de pré-traitement 11 et une zone de concentration par filtration12. Un effluent brut à traiter est amené dans la zone de pré-traitement par une ligne d'alimentation 11A et un effluent traité sort par une ligne de sortie 12A.

Dans une telle version, l'effluent traité 12A peut être utilisable dans des applications agricoles ; toutefois, de manière préférée, cet effluent traité (ou du moins une partie de cet effluent) est appliqué à l'entrée d'une zone de filtration à haute pression 13, d'où sort, par une ligne 13A, un effluent de meilleure qualité que l'effluent de la ligne 12A.

La zone de concentration par filtration comporte une pluralité de membranes de microfiltration ou d'ultrafiltration, c'est-à-dire des membranes de filtration dont le seuil de coupure est au moins égal en pratique à 10 nanomètres.

Le procédé mis en œuvre par une telle installation comporte, pour le traitement d'un flux d'eaux usées, les étapes suivantes :
- On applique à ce flux un pré-traitement limité, comportant au plus un traitement d'élimination des matières en suspension les plus grosses (par dégrillage/dessablage ou déshuilage),
- On applique à cet effluent pré-traité un traitement de filtration au moyen de membranes de microfiltration ou d'ultrafiltration, en faisant circuler le flux tangentiellement aux membranes avec une vitesse d'au moins 0.1 m/s, voire 0.3 m/s (préférentiellement 0.5m/s) en présence d'un séquestrant organique composé à base de phosphonate organique, pour obtenir typiquement une concentration de 0.25 mg/L à 4 mg/L (ou de préférence pas plus de 3.75 mg/L), ce qui est apparu être une concentration efficace pour séquestrer des ions métalliques contenus dans le flux et minimiser la formation de carbonate de calcium, avec une différence de pression de part et d'autre des membranes inférieure ou égale à 5 bars.

Il est rappelé que, lors d'une filtration membranaire se fait en écoulement tangentiel, ce qui est notamment le cas dans des procédés de filtration membranaires à basse pression, le courant d'effluent à traiter (courant en entrée) ne passe pas au complet à travers les membranes ; en pratique, ce courant se divise en deux courants de sortie, à savoir le perméat qui a traversé les membranes au travers de leurs pores et le concentré qui est rejeté. Afin d'augmenter le débit d'écoulement tangentiel et donc le balayage de la surface de la membrane, il est avantageux que le concentré soit partiellement, voire totalement, recirculé en amont de l'unité membranaire, au moyen d'une boucle de recirculation. Cette boucle, habituelle dans le cas de filtration en écoulement tangentiel, n'est généralement pas représentée. Elle n'est pas représentée non plus sur les figures.

L'addition du séquestrant favorise le piégeage des ions métalliques, empêche la précipitation du carbonate de calcium et favorise la filtration de l'eau à travers les pores de la membrane.

La zone 13 permet d'appliquer à l'effluent traité dans la zone 12 un traitement de filtration sur des membranes de nanofiltration ou d'osmose inverse.

Le séquestrant est par exemple constitué du composé commercialisé sous la dénomination Hydrex 4101 à une concentration de 1-15 mg/L (il contient 25% de phosphonates), ce qui correspond à la concentration précitée de 0.25 mg/L à 3.75 mg/L de phosphonates organiques. Ce composé est formé d'un mélange d'acides phosponiques, plus précisément d'ATMP (Amino tris(methylenephosphonic acid) et de HDTMP (Hexamethylenediamine tetra(methylene phosphonic acid).

Il est à noter qu'il s'agit d'un agent séquestrant à fort potentiel, en ce sens qu'une molécule suffit à maintenir en solution plusieurs milliers de molécules (notamment de calcium) susceptibles de précipiter. Il est en outre capable de séquestrer, par chélation, des ions métalliques notamment de métaux lourds.

Bien que les phosphonates soient connus pour avoir tendance à s'absorber à la surface des matières en suspension, en particulier sur les boues (lorsqu'il y en a), le fait d'en injecter avec l'effluent à peine pré-traité dans la zone 12 permet de densifier les boues tout en minimisant la précipitation des éléments contenus dans l'effluent. L'injection de ces phosphonates est schématisée par la flèche 100 ; cette injection peut se faire avant la zone 12 ou dans cette zone. En effet, il est apparu que ces phosphonates effectuent d'abord une séquestration ou une chélation de composés de calcium, de minéraux ou de métaux, avant de s'absorber sur les matières et suspension et sur les particules ou colloïdes. De manière générale, plus le taux de conversion est élevé, plus le fluide à traiter est concentré et plus la filtration au travers de la membrane est difficile avec un risque de colmatage des membranes ; toutefois, conformément à l'invention, les phosphonates permettent de limiter le pouvoir d'encrassement de l'eau à traiter et permet donc d'augmenter le taux de conversion. En outre, un éventuel excès de phosphonates pourra s'éliminer avec les boues ; une fois absorbés, ces phosphonates restent fixés à leur support de manière durable, ce qui limite fortement les risques associés pour l'environnement ; l'élimination des phosphonates organiques peut se faire ensuite lors d'un éventuel traitement biologique anaérobie du concentrat (il s'agit d'une option particulièrement intéressante).

La figure 2 représente un exemple d'installation permettant la mise en œuvre de l'invention.

Cette installation, désignée par la référence 20, comporte des zones qui, étant analogues à des zones de la figure 1, sont désignées par des nombres qui découlent des références de cette figure 1 par addition du nombre 10, à l'exception de l'injection de phosphonates organiques restant désignée par la flèche 100. Ainsi, cette installation 20 comporte une voie 21A d'alimentation en effluent brut à traiter qui aboutit à une zone de pré-traitement 21 où se produit, si cela est utile, une élimination des particules en suspension les plus importantes (par dégrillage/dessablage ou par déshuilage) ; la sortie de cette zone 21 est connectée à l'entrée d'une zone de filtration 22 comportant des membranes de microfiltration MF ou d'ultrafiltration UF, avec un seuil de coupure en pratique supérieur ou égal à 10 nanomètres. L'effluent filtré sort de cette zone 22 par une voie 22A qui permet, si on le souhaite, une utilisation sans autre traitement (par exemple en milieu agricole).

Cette installation comporte en outre une zone supplémentaire de filtration 23, comportant des membranes de filtration ayant des seuils de coupure inférieurs à ceux des membranes de la zone 22 ; il s'agit avantageusement de membranes de nanofiltration NF ou d'osmose inverse OI. Un effluent très pur en sort, par une voie 23A.

Dans l'installation de la figure 2, une zone de traitement anaérobie par digestion 24 est prévue pour recueillir les boues formées dans la zone de concentration par filtration 22 ; par ce traitement biologique, on obtient du biogaz qui, sortant par la voie 24A, peut être valorisé ; à titre d'exemple préféré, ce biogaz sert de source d'énergie pour le fonctionnement des membranes comme, par exemple, le maintien des différences de pression requises.

De même, les boues formées dans la seconde zone de filtration (quoiqu'en quantités bien moindres que dans la zone 22) peuvent être elles aussi amenées à une zone de traitement biologique 25, laquelle peut être confondue avec la zone 24, ou dont les boues peuvent être envoyées à la zone 24 tandis qu'une voie de retour est prévue depuis cette zone 24 vers la zone 25 pour y amener l'effluent clarifié dans la zone 24. De manière avantageuse, l'effluent clarifié dans l'une ou les deux zones 24 et 25 est réinjecté dans la zone de pré-traitement, ou auprès de celle-ci, ici par la voie 21B, ce qui permet d'avoir une voie unique de sortie d'effluent purifié. Les boues non digérées sont évacuées (par une voie ici non représentée).

De manière avantageuse, le passage de l'effluent provenant de la zone de concentration dans la zone 23 se fait en présence d'un ajout de séquestrant (schématisé par une flèche 110), de préférence identique à celui utilisé dans la zone 22, c'est-à-dire un composant à base de phosphonates organiques ; la concentration de ces phosphonates peut être comprise entre un et deux tiers de la concentration utilisée dans la zone 22.

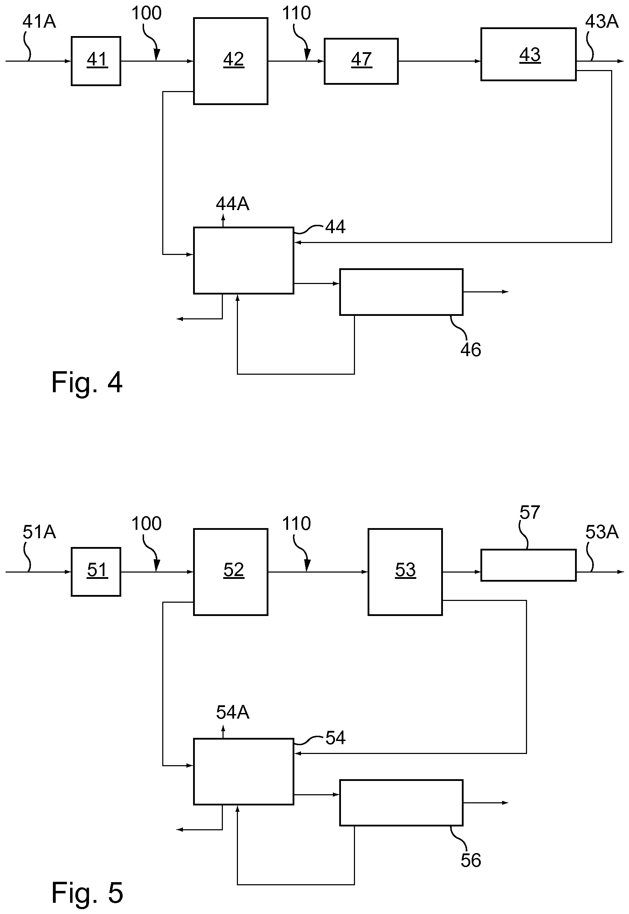

Une filière de traitement conforme à l'invention de la figure 2 comporte ainsi, de manière générale :
- Une étape de pré-concentration des eaux brutes sur membrane organique ou minérale (en 22),
- Une étape de traitement complémentaire à l'aide de membranes de nanofiltration ou d'osmose inverse (en 23)
- Eventuel traitement intermédiaire d'élimination des phosphates et composés azotés (voir la figure 4 ci-dessous),
- Un traitement des concentrats issus de ces deux étapes par digestion (concentrât solide ou liquides, en 24 et/ou 25) ou dans une petite unité de traitement biologique conventionnelle ou, en variante, par un procédé qui comporte des étapes de traitement biologique à l'aide de bactéries spécifiques de l'oxydation anaérobie de l'ammonium, en abrégé « anamox » pour « anaerobic ammonium oxidation », qui se développent sur un média incorporé dans le réacteur biologique. Ces bactéries ont l'avantage de transformer une partie de l'ammoniac en azote gazeux sans passer par l'étape nitrates. Elles permettent ainsi de réduire la consommation d'O2 d'environ 30 %, qui se traduit par une réduction substantielle d'énergie (en raison de la réduction de l'aération). Elles permettent également de réduire la demande en source de carbone externe,
- Valorisation des sous-produits (voie 24A).

Une telle installation est par exemple composée d'un module membranaire comportant 108 tubes de diamètre de 5.2 mm de longueur de 3 m pour une surface totale de 5 m². Ces membranes ont été formées en PVDF (polyfluorure de polyvinylinède), avec un seuil de coupure de 30 nm. Avant d'arriver sur la membrane, l'eau usée passait par un dégrilleur dont les trous avaient un diamètre équivalent de 1 mm.

L'installation aurait bien entendu pu être formée d'un nombre différents de modules membranaires, avec des diamètres et des longueurs différents. De manière préférée, le diamètre des tubes est choisi dans la plage de 2 à 20 mm.

Le contrôle du colmatage a été réalisé en faisant circuler la solution à traiter parallèlement à la membrane ; cette circulation tangentielle a créé, au voisinage de la membrane, une contrainte de cisaillement qui limite l'accumulation des particules retenues. Sous l'action d'un gradient de pression, la solution à traiter se divise, au niveau de la membrane, en deux flux de compositions différentes, à savoir celui qui passe à travers la membrane, ou perméat, et celui qui est retenu par la membrane, appelé concentrat ou rétentat.

Cette circulation est un élément dimensionnant, la vitesse au droit de la membrane devant, selon l'invention, être au minimum de 0,1 m/s, voire 1 m/s, ou même d'au moins 2 m/s.

Avec ces conditions et un facteur volumique de concentration de 3,33, c'est-à-dire un taux de conversion d'au moins supérieur à 70%, le flux à travers la membrane a permis d'avoir un procédé économiquement rentable. Le flux a été supérieur à 30 L/.m².h, aussi noté LMH, (litre par heure et par mètre carré), voire supérieur à 40 LMH pour une pression transmembranaire de 0.5 bar (il s'agit en fait de la différence de pression existante entre les deux faces de la membrane).

L'eau usée prétraitée a été introduite dans la zone 22, pour alimenter la membrane à débit constant (environ 17 m³/h afin d'assurer la vitesse souhaitée ici de 2 m/s). Le perméat (environ 200 L/h, soit environ 40 LMH) a été rejeté et le concentrat a été recirculé vers la cuve d'alimentation ; le taux de purge du concentrat a été calculé afin de simuler le taux de conversion voulu (filtration en mode « Feed and Bleed »).

Grâce à la mise en place d'un rétrolavage simple ou chimique, le flux a pu être maintenu au cours du temps. Afin d'éviter la précipitation de certaines espèces un ajout d'acide a pu être effectué en complément du séquestrant en tête de membrane (soit dans la cuve, soit dans la canalisation amenant l'effluent).

Avec un pH régulé à 7.6 et une injection du composé Hydrex 4101 à une concentration de 10 mg/l on a observé un taux de conversion de 80% (c'est-à-dire un facteur volumique de concentration de 5) avec la vitesse visée de 2 m/s au droit de la membrane.

Le contrôle du colmatage à un niveau acceptable a été réalisé en ajoutant des séquestrants (ce qui a, en outre de l'effet mentionné ci-dessus, permis de réduire l'ajout d'acide) ; à un pH régulé à 7.6 on peut réduire très fortement l'ajout d'acide.

Avec un taux de conversion de 50%, il a été possible de maintenir un niveau de 50 LMH, avec 1 CEB/jour en présence de 0.6 ppm de séquestrant Hydrex 4101, avec 1 CEB tous les 2-3 jours avec 1 ppm de ce séquestrant, ou 1 CEB tous 7 à 10 jours avec 10 ppm ; on peut en déduire la plage préférée de 1-10 ppm de séquestrant. (CEB désignant CEB, ce qui veut dire Chemical Enhanced Backwash (pour simplifier : rétrolavage chimique c'est dire injection d'une solution de nettoyage dans le sens inverse de la filtration)).

A titre d'exemple, on a obtenu les mesures suivantes :

| | Eau Dégrillée | Concentrat | Perméat |
|---|---|---|---|
| DCO t (mg/l) non filtré) | 654 | 2054 | 142 |
| DCO s (mg/l filtration à 0.45 micromètres | 199 | 241 | 135 |
| MES g/l | 0.25 | 0.99 | 0.03 |
| MS g/l | 0.80 | 1.73 | 0.53 |
| N-NH4 mg/l filtré à 0.45 micromètres | 41 | 48 | 48 |
| P t mg/l non filtré | 26 | 59 | 16 |
| P-PO4 mg/l filtré à 0.45 micromètres | 13.20 | 18 | 13.20 |
| SO4-mg/l filtré à 0.45 micromètres | 70 | 87 | 69 |
| Fe c/s mg/l non filtré | 4.3 | 10.7 | 0.2 |
| Fe s mg/l filtré à 0.45 micromètres | 0.30 | 0.53 | 0.19 |
| pH | 8.15 | 7.55 | 7.8 |
| Turbidité NTU | 186 | 760 | 0.6 |

Le biogaz issu de la méthanisation des « concentrats(ou rétentats) » organiques sort des méthaniseurs tels que 24 ou 25 en un état saturé en humidité (plusieurs pourcents en volume). Après séchage, il se compose essentiellement de méthane (60 à 65% en volume), de gaz carbonique (30 à 40% et gaz mineurs (hydrogène, azote, etc.) dont l'hydrogène sulfuré à hauteur de quelques dizaines à quelques milliers de ppm.

Ce gaz peut être utilisé pour produire, conjointement ou non, de l'électricité et de la chaleur, lesquelles peuvent être utilisées pour les besoins de l'installation industrielle. L'utilisation et la valorisation énergétique du biogaz est la production de chaleur en chaudière et la cogénération chaleur-électricité fournit de l'électricité avec un rendement électrique de 35 à 41% (soit 2.2 à 2.5 kWh électrique produit par Nm3 de biogaz).

Ainsi diverses solutions de valorisation du biogaz sont :
- Valorisation de chaleur in-situ en chaudière (rendement supérieur à 85%)
- Cogénération chaleur-électricité (rendement de 42% en thermique et de 38% en électrique).

Le biogaz peut servir de combustible à une chaudière à vapeur et la combustion est assurée au moyen de brûleurs intégrés à des chaudières dotées de foyers en acier inoxydable qui produisent de la vapeur à haute pression et à haute température. De l'eau en circuit fermé est chauffée par ces chaudières et la vapeur sèche créée est ensuite dirigée vers une turbine reliée à un alternateur qui convertit l'énergie mécanique en énergie électrique ; la vapeur est alors condensée (par un aéro-condensateur) et revient à l'état liquide (à 135°C).

Une simulation a été faite à propos d'une filière de traitement d'eau usée de 100 000 EH (c'est-à-dire équivalent-habitants) en raisonnant sur une eau standard à pollution moyenne standard en DCO, DBO, MES, NK et phosphore total ; le débit à traiter a été de 25 000 m3/j. La production de boues issues de la pré-concentration (10300 kg de matières sèches par jour) a été estimée en fonction des tests pilote réalisés et des rendements obtenus notamment en abattement de la pollution particulaire (99%). Cette production de boues riches en matières organiques volatiles donc en potentiel méthanogène (production de biogaz) est une source d'énergie couplée à un procédé de méthan isation.

Sachant qu'une UF (unité d'ultrafiltration) consomme environ 1 kWh/m3 d'eau à traiter, la seule digestion des 10300 kg MS/j permet de couvrir environ 20% des besoins énergétiques de l'ultrafiltration par un moteur de cogénération.

Un apport de matières extérieures (matières organiques facilement biodégradables comme les résidus alimentaires, résidus industriels biodégradables etc.) alimentant le digesteur permet d'augmenter la quantité de biogaz produite valorisable en énergie. Cette co-digestion permet alors de couvrir la totalité des besoins énergétiques de l'ultrafiltration.

Dans le cas d'une filière globale incluant la double filtration membranaire (UF et osmose inverse), induisant une meilleure qualité d'eau pour diverses applications municipales et industrielles, les concentrats de l'osmose inverse associés aux boues extérieures (co-digestion) permettent de couvrir de l'ordre de la moitié des besoins de la totalité de l'installation (en rappelant que la demande en énergie pour une osmose inverse se situe autour de 1.8 kWh/m3 d'eau à traiter).

Cette solution de pré-traitement direct avec une UF et son optimisation énergétique, se distingue des filières conventionnelles du type boues-activées/clarification/membranes-UF (consommation de l'ordre de 1.3 kWh/m3) et réacteur à membranes (0.7 kWh/m3). Toutefois, même si la demande en énergie du réacteur à membrane semble plus faible, elle n'en demeure pas moins plus difficile à couvrir car les boues issues d'un tel réacteur sont plus minérales (stabilisées en raison d'un âge de boues élevé), contrairement aux boues primaires issues de l'UF qui sont peu minérales mais fortement chargées en matières organiques valorisables. De plus, les filières avec réacteur avec membranes impliquent une surface au sol importante, un bassin de boues activées (génie civil donc onéreux ainsi que la maintenance des équipements) qui montreraient que cette solution est plus complexe à exploiter et à mettre en œuvre qu'un traitement direct sur UF.

Un traitement biologique conventionnel permet de traiter la pollution particulaire et dissoute à hauteur d'environ 90%, ce qui signifie que les concentrations des rejets des différentes substances présentes initialement dans l'eau usée seraient de 30 mg/l en MES, 90 mg/l en DCO, 30 mg/l en demande biologique en oxygène (DBO5) 15 mg/l d'azote global (NGL) et 2 mg/l de phosphore total (Pt). Dans ces conditions l'eau traitée suivant cette filière conventionnelle ne peut être réutilisée directement.

La réutilisation de cette eau pour une amélioration de la qualité de l'eau à des fins agricoles nécessite un traitement complémentaire qui impliquerait une filtration sur sable avec UV et/ou chloration, une filtration mécanique avec UV et/ou chloration ou une filtration membranaire (MF ou UF) ; cette dernière étape permet d'éliminer une quantité de micro-organismes à hauteur de 5-6 log, ce que ne permet pas les traitements conventionnels ou les traitement additionnels tels que la filtration gravitaire ou mécanique.

La réutilisation de cette eau pour une amélioration importante de la qualité de l'eau à des fins de process industriels, de rechargement des nappes phréatiques, en eau potable indirecte etc. nécessite d'ajouter après la première étape de traitement membranaire (MF ou UF) une seconde étape de traitement d'osmose inverse ou de nanofiltration car cette étape permet d'éliminer aussi bien les substances dissoutes que les sels présents dans l'eau.

Les figures 3 à 5 représentent des options possibles.

Ainsi la figure 3 reprend la substance de l'exemple de la figure 2 (les éléments analogues y sont désignés par des signes de référence découlant de ceux de cette figure 2 par addition du nombre 10), avec un seul digesteur 34 pour traiter (en milieu anaérobie) les « rétentats ou concentrats »des deux zones de filtration 32 et 33, avec l'application d'un traitement biologique (en 36) à l'effluent sortant du digesteur et un retour des boues de la zone biologique vers ce digesteur ; la sortie de cette zone biologique 36 est indépendante de la sortie de la zone de filtration haute pression 33. Comme précédemment, le biogaz récupéré lors du traitement anaérobie peut être transformé en énergie.

La figure 4 représente une autre variante de l'exemple de la figure 2 (les éléments analogues y sont désignés par des signes de référence découlant de ceux de cette figure 2 par addition du nombre 20), avec un seul digesteur 44 pour traiter (en milieu anaérobie) les « concentrats ou rétentats »des deux zones de filtration 42 et 43, avec l'application d'un traitement biologique (en 46) à l'effluent sortant du digesteur et un retour des boues de la zone biologique vers ce digesteur ; la sortie de cette zone biologique 46 est indépendante de la sortie de la zone de filtration haute pression 43. Comme précédemment, le biogaz récupéré lors du traitement anaérobie peut être transformé en énergie. A la différence de l'installation de la figure 3, cette installation comporte une zone 47 de traitement complémentaire, entre les zones de filtration 42 et 43, par exemple pour un traitement physico-chimique permettant la récupération du phosphore.

Enfin, la figure 5 représente une variante de l'installation de la figure 2 (les éléments analogues y sont désignés par des signes de référence découlant de ceux de cette figure 2 par addition du nombre 30), avec un seul digesteur 54 pour traiter (en milieu anaérobie) les « concentrats ou rétentats »des deux zones de filtration 52 et 53, avec l'application d'un traitement biologique (en 56) à l'effluent sortant du digesteur et un retour des boues de la zone biologique vers ce digesteur ; la sortie de cette zone biologique 56 est indépendante de la sortie de la zone de filtration haute pression 53. Comme précédemment, le biogaz récupéré lors du traitement anaérobie peut être transformé en énergie. A la différence de l'installation de la figure 4, cette installation comporte une zone de traitement complémentaire 57, non pas entre les zones de filtration, mais après la zone de filtration à haute pression, ici constitué par une zone de traitement destinée à éliminer l'ammoniaque par stripping qui consiste à dégazer l'ammoniac de l'eau par un procédé physique à p_{H} basique.

On comprend aisément que bien d'autres variantes peuvent être envisagées, ces figures ayant en commun de proposer des exemples de filière de traitement conformes à l'invention qui comportent :
- Une première étape de prétraitement qui peut inclure un dégrillage-dessablage-déshuilage associé ou non à un micro tamisage ou tout autre prétraitement afin d'éliminer les particules minérales (sable notamment), ainsi que les graisses et huiles contenues dans le flux entrant d'eaux usées,
- Une seconde étape, consistant en un traitement direct sur des membranes basses pression organiques ou céramiques, afin de retenir toutes les matières en suspension (MES) et de délivrer un effluent intermédiaire pratiquement dépourvu de MES et de polluants organiques particulaires ou colloïdales ; une bonne décontamination des micro-organismes est également associée à cette étape de traitement. Cette eau peut être directement utilisée en agriculture, ou comme eau industrielle pour diverses applications urbaines, voire être rejetée dans un milieu récepteur (sensible ou conventionnel),
- Une troisième étape inclut un traitement complémentaire de l'eau issue de la seconde étape, par passage sur des membranes d'osmose inverse ou de nanofiltration. Cette étape permet d'éliminer les composés solubles organiques et minéraux. On obtient ainsi une eau débarrassée de ces polluants et peut alors être utilisée pour la recharge de nappes phréatiques, comme eau industrielle pour des processus sensibles (micro-électronique, alimentation, papeterie, etc.), pour une utilisation en eau industrielle urbaine, voire comme eau potable dans certaines conditions d'utilisation.

En outre, on peut noter ce qui suit :
- Le concentrat issu de la seconde étape, principalement constitué de MES et de pollution organique particulaire et/ou colloïdale est dirigé vers une étape de digestion afin de produire du biogaz,
- En fonction de la qualité des eaux usées entrantes, une étape intermédiaire peut être prévue entre la seconde étape et la troisième étape pour traiter des polluants particuliers tels que le phosphore ou l'azote,
- Le concentrat liquide issu de la troisième étape, principalement constitué de substances organiques et minérales est également dirigé vers une petite unité de traitement biologique afin de réduire la pollution qui y est concentrée : les boues produites dans cette unité biologique sont également dirigées vers le digesteur afin d'en réduire la teneur organique et de produire du biogaz,
- Les boues biologiques et minérales issues de cette unité de traitement biologique peuvent ainsi être valorisées pour produire de l'énergie (biogaz), permettre une valorisation de sous-produits comme la production de struvite, de bioplastiques ou encore de substances organiques qui peuvent être réutilisées dans cette unité à titre de source de carbone organique.

La première étape consiste en un pré-traitement conventionnel, par lequel le flux entrant subit un dégrillage, un déssablage et/ou un déshuilage, de manière à en extraire les particules les plus grosses.

La seconde étape consiste à faire subir au flux ainsi prétraité une filtration membranaire au moyen de membranes de microfiltration ou d'ultrafiltration ; ces membranes peuvent être de type organique ou minéral (par exemple en céramique). Cette seconde étape peut être conduite avec les conditions opératoires suivantes :
- Flux entrant de 40 l/m²/h à 200 l/m²/h ;
- Taux de conversion pouvant atteindre 50% à 85%,
- Le nettoyage des membranes peut être assuré avec du chlore, de la soude ou de l'acide avec une fréquence dépendant des conditions de fonctionnement, entre une fois par jour à une fois par semaine ;
- Un traitement intermédiaire peut être prévu pour extraire, par exemple, le phosphore, par des phénomènes physico-chimiques tels que, par exemple, une précipitation ; ce traitement intermédiaire peut aussi viser à extraire l'azote ammoniacal, par exemple par stripping.

Une troisième étape consiste en un affinage du traitement au moyen de membranes de nanofiltration ou d'osmose inverse afin d'éliminer la pollution organique et minérale ; les flux applicables vont de 15 l/m²/h à 35 l/m²/h, avec un taux de conversion de 70% à 90% ; un nettoyage peut être effectué au chlore, à la soude ou à l'acide avec une fréquence dépendant des conditions de fonctionnement entre une fois par jour et une fois par semaine.

En parallèle, le concentrat solide est traité par digestion et valorisation du biogaz produit, tandis que le concentrat liquide est traité dans une petite unité biologique ; les unités de traitement biologique font appel aux techniques utilisées actuellement (boues activées, biofiltres, bioréacteur à lit mobile (MBB

R - voir ci-dessus), les bioréacteurs à membrane MBR, les digesteurs anaérobie à flux ascendant UASB, etc.) et selon les modes actuels de dimensionnement.

Les sous-produits peuvent alors être valorisés (biogaz, struvite, bioplastiques, etc.).

On appréciera que l'invention présente divers avantages par rapport aux solutions actuelles :
- c'est un processus physique plus simple à exploiter qu'un processus biologique,
- cette filière est peu sensible aux variations de charges ou de température,
- la qualité de l'eau traitée est constante quelle que soit la qualité de l'eau brute
- amélioration de la qualité de l'eau produite lors de chaque étape de traitement avec une possibilité de réutilisation directe pour diverses applications (agriculture, industries, eau potable directe ou indirecte),
- réduction de l'emprise au sol,
- réduction de l'installation de traitement biologique comparativement à une unité conventionnelle,
- réduction des coûts énergétiques liés aux systèmes d'aération, de brassage et recirculation des boues,
- réduction de la production de boue liée au traitement biologique,
- augmentation de la capture de DCO contenue dans l'eau usée pour une transformation en méthane,
- réduction des émissions de CO2 sur l'étage biologique comparé à une filière conventionnelle,
- système de traitement membranaire modulable et applicable en fonction de la qualité d'eau finale requise,
- système de traitement membranaire modulable et applicable en fonction des utilisations spécifiques requises à l'eau traitée,
- il n'y a pas de problème d'odeurs (traitement des odeurs limité à quelques ateliers,

Il est à noter que l'invention permet de réduire fortement les doses de séquestrant à injecter en amont d'une zone de filtration par osmose inverse ou de nanofiltration, du fait de l'injection de ce même séquestrant avant les membranes de filtration basse pression.

En fait, la dose de séquestrant injectée en amont de la première zone de filtration (à basse pression) est supérieure à la dose injectée ensuite, en amont de la seconde zone de filtration (à haute pression).

De manière surprenante, il a été constaté que les performances hydrauliques des membranes étaient meilleures lorsqu'augmentait la teneur des matières en suspension (MES) dans la boucle de recirculation (voir l'explication donnée à propos de la filtration membranaire en écoulement tangentiel).

Ainsi, un suivi sur plusieurs jours du flux (corrigé à 20°C, mesuré en litres par heure et mètre carré) au travers des membranes et de la teneur des MES dans la boucle de recirculation (mesurée en ppm), a montré que pour des valeurs de 0.70 à 0.75 de la teneur des MES, on avait un flux de 40-45, mais qu'une baisse des MES vers 0.50-0.55 s'accompagnait d'une baisse du flux vers environ 30. On peut donc supposer que c'est en permettant de maintenir des teneurs élevées en MES et des boues denses dans la boucle de recirculation que le séquestrant améliore les performances de filtration.

Il est intéressant de noter que l'effet de densification des boues apporté par le séquestrant, en complément de son effet de minimisation du colmatage, a en outre pour effet positif d'améliorer le rendement de production de biogaz dans le réacteur de gazéification. De tels avantages s'observent même en l'absence d'un second étage de filtration.

## Revendications

1. Procédé de traitement d'un flux d'eaux usées,
selon lequel on applique à ce flux, après au plus un éventuel pré-traitement de dégrillage/dessablage ou de déshuilage, un traitement de filtration au moyen de membranes de microfiltration ou d'ultrafiltration, en faisant circuler le flux tangentiellement aux membranes avec une vitesse d'au moins 0.1 m/s en présence d'un séquestrant organique composé à base de phosphonate organique à une concentration efficace pour séquestrer des ions métalliques contenus dans le flux et minimiser la formation de carbonate de calcium, avec une différence de pression de part et d'autre des membranes inférieure ou égale à 5 bars et on applique ensuite un second traitement de filtration au moyen de membranes de nanofiltration ou d'osmose inverse,
dans lequel on prélève des boues générées lors du traitement de filtration au moyen de membranes de microfiltration ou d'ultrafiltration et on les injecte dans un réacteur biologique anaérobie en sorte d'y former un biogaz que l'on récupère, et
dans lequel, après le traitement de filtration au moyen de membranes de microfiltration ou d'ultrafiltration et le second traitement de filtration au moyen de membranes de nanofiltration ou d'osmose inverse, on transfère le concentrat produit par les membranes de nanofiltration ou osmose inverse vers ledit réacteur biologique anaérobie pour y produire du biogaz.

2. Procédé selon la revendication 1, dans lequel l'addition du séquestrant favorise le piégeage des ions métalliques, empêche la précipitation du carbonate de calcium et favorise la filtration de l'eau à travers les pores de la membrane.

3. Procédé selon la revendication 1 ou la revendication 2, dans lequel le flux qui circule le long des membranes contient de 0.25 mg/L à 4 mg/L de phosphonates.

4. Procédé selon l'une quelconque des revendications 1 à 3 dans lequel le biogaz produit est transformé en énergie réutilisable sur site.

5. Procédé selon l'une quelconque des revendications 1 à 3, dans lequel le réacteur anaérobie est couplé avec un réacteur biologique constitué de bactéries fixées qui permet d'éliminer l'azote produit dans le réacteur anaérobie.

6. Procédé selon la revendication 5, dans lequel le réacteur biologique à bactéries fixées est un bioréacteur à lit mobile MBBR en sorte de combiner la nitratation et l'oxydation anoxique de l'ammoniaque par le développement d'un biofilm sur un support en plastique mis en mouvement par agitation ou aération.

## Patentansprüche

1. Verfahren zur Behandlung eines Abwasserstroms,
gemäß welchem man an diesem Strom, nach höchstens einer eventuellen Rechen-/Entsandungs- oder Entölungs-Vorbehandlung, eine Filtrationsbehandlung mittels Mikrofiltrations- oder Ultrafiltrations-Membranen anwendet, indem man den Strom mit einer Geschwindigkeit von mindestens 0,1 m/s in Gegenwart eines zusammengesetzten organischen Sequestriermittels auf Organophosphonat-Basis in einer Konzentration, welche wirksam ist, um im Strom enthaltene Metallionen zu sequestrieren und die Bildung von Calciumcarbonat zu minimieren, mit einem Druckunterschied von kleiner oder gleich 5 bar an beiden Seiten der Membranen, tangential an die Membranen fließen lässt, und man anschließend eine zweite Filtrationsbehandlung mittels Nanofiltrations-Membranen oder Umkehrosmose anwendet,
in welchem man bei der Filtrationsbehandlung mittels Mikrofiltrations- oder Ultrafiltrations-Membranen erzeugte Schlämme entnimmt und sie in einen anaeroben Bioreaktor einspritzt, um dort Biogas zu bilden, das man gewinnt, und
in welchem man, nach der Filtrationsbehandlung mittels Mikrofiltrations- oder Ultrafiltrations-Membranen und der zweiten Filtrationsbehandlung mittels Nanofiltrations-Membranen oder Umkehrosmose, das durch die Nanofiltrations-Membranen oder Umkehrosmose erzeugte Konzentrat zu dem anaeroben Bioreaktor überführt, um dort Biogas zu erzeugen.

2. Verfahren nach Anspruch 1, in welchem die Zugabe des Sequestriermittels die Abscheidung von Metallionen begünstigt, die Ausfällung von Calciumcarbonat verhindert und die Filtration des Wassers durch die Poren der Membran hindurch begünstigt.

3. Verfahren nach Anspruch 1 oder 2, in welchem der Strom, der entlang der Membranen fließt, 0,25 mg/L bis 4 mg/L Phosphonate enthält.

4. Verfahren nach einem der Ansprüche 1 bis 3, in welchem das erzeugte Biogas in vor Ort wiederverwendbare Energie umgewandelt wird.

5. Verfahren nach einem der Ansprüche 1 bis 3, in welchem der anaerobe Reaktor mit einem aus fixierten Bakterien gebildeten Bioreaktor gekoppelt ist, der es ermöglicht, im anaeroben Reaktor erzeugten Stickstoff zu entfernen.

6. Verfahren nach Anspruch 5, in welchem der Bioreaktor mit fixierten Bakterien ein MBBR-Schwebebett-Bioreaktor ist, um Nitratation und anoxische Ammoniakoxidation durch Entwicklung eines Biofilms auf einem Kunststoffträger zu kombinieren, der durch Rühren oder Belüften in Bewegung versetzt wird.

## Claims

1. Process for the treatment of a flow of waste water, according to which there is applied to this flow, after at most an optional pre-treatment of screening/degritting or deoiling, a filtration treatment by means of microfiltration or ultrafiltration membranes, by causing the flow to circulate tangentially to the membranes at a velocity of at least 0.1 m/s, in the presence of an organic sequestering agent composed based on organic phosphonate at a concentration that is effective for sequestering metal ions contained in the flow and minimizing the formation of calcium carbonate, with a differential pressure on either side of the membranes that is less than or equal to 5 bar and a second filtration treatment is then applied by means of nanofiltration or reverse osmosis membranes,
in which sludges generated during the filtration treatment by means of microfiltration or ultrafiltration membranes are removed and are injected into an anaerobic biological reactor so as to form therein a biogas that is recovered, and in which, after the filtration treatment by means of microfiltration or ultrafiltration membranes and the second filtration treatment by means of nanofiltration or reverse osmosis membranes, the concentrate produced by the nanofiltration or reverse osmosis membranes is transferred to said anaerobic biological reactor in order to produce biogas therein.

2. Process according to claim 1, in which the addition of the sequestering agent promotes the capture of metal ions, prevents the precipitation of calcium carbonate and promotes the filtration of water through the pores of the membrane.

3. Process according to claim 1 or claim 2, in which the flow that circulates along the membranes contains from 0.25 mg/L to 4 mg/L of phosphonates.

4. Process according to any one of claims 1 to 3, in which the biogas produced is converted into energy that can be used on site.

5. Process according to any one of claims 1 to 3, in which the anaerobic reactor is coupled with a biological reactor constituted by fixed bacteria which makes it possible to remove the nitrogen produced in the anaerobic reactor.

6. Process according to claim 5, in which the biological reactor with fixed bacteria is a moving bed bioreactor MBBR so as to combine nitratation and anoxic oxidation of ammonia through the development of a biofilm on a plastic support moved by agitation or aeration.
